# EUROPÄISCHE PATENTSCHRIFT

(11) **EP 0 945 726 B1**
(45) Veröffentlichungstag und Bekanntmachung des Hinweises auf die Patenterteilung: **07.01.2009**
(21) Anmeldenummer: 99101657.7
(22) Anmeldetag: 05.02.1999
(51) Int. Cl.: G01N 29/26

(54) **Ultraschall-Prüfvorrichtung mit einer Anzahl nebeneinander angeordneter, einzelner Prüfköpfe**
Ultrasonic testing device with a number of individual probes placed side by side
Dispositif d'examen par ultrasons avec un nombre de sondes individuelles placées côte à côte

(30) Priorität: 26.03.1998 DE 19813414
(43) Veröffentlichungstag der Anmeldung: 29.09.1999
(73) Patentinhaber: KRAUTKRÄMER GmbH & Co., D-50354 Hürth (DE)
(72) Erfinder: Prause, Reinhard, Dipl.-Ing., 53757 Sankt Augustin (DE)
(74) Vertreter: Bauer, Wulf

(56) Entgegenhaltungen:
- EP-A- 0 114 595
- EP-A- 0 211 427
- EP-A- 0 709 673
- DE-A- 2 345 155
- DE-A- 3 241 200
- DE-A- 3 832 223
- DE-A- 19 525 446
- US-A- 4 215 584

## Beschreibung

Die Erfindung bezieht sich auf eine Ultraschall-Prüfvorrichtung nach dem Oberbegriff des Patentanspruchs 1, wie sie aus der DE 195 25 446 A1 bekannt ist.

Bei der Untersuchung mit Prüflingen mittels Ultraschall-Prüfvorrichtungen soll jeder Bereich des Volumens mit einer ausreichenden Messgenauigkeit erfasst werden. Alle im Prüfling möglichen Fehlerarten und Fehlerlagen sollen mit hinreichender Ultraschallimpuls-Echoamplitude erfasst werden, so dass ein sicherer Fehlernachweis gewährleistet ist. Ziel ist es, für alle möglichen Fehlerlagen innerhalb des Gesamtvolumens eine hinreichende Echoamplitude des minimal nachweisbaren Fehlers beliebiger Art zu erreichen.

Prüfköpfe der hier in Rede stehenden Ultraschall-Prüfvorrichtungen haben üblicherweise piezoelektrische Elemente. Sie sind flach ausgebildet und haben kreisförmige, rechteckförmige oder eine andere Geometrie. Sie dienen als Sendeprüfkopf und (zeitlich danach) als Empfangsprüfkopf.

Die von einem derartigen Prüfkopf abgestrahlte Ultraschallenergie verläuft im Wesentlichen keulenförmig. Sie ist am größten im Bereich eines Zentralstrahls des Prüfkopfes und wird zum Rand der Keule hin schwächer.

Gleiches gilt für die Empfangseigenschaften dieses Prüfkopfes. Dies bedeutet, dass bei zwei nebeneinander angeordneten Prüfköpfen die Nachweiswahrscheinlichkeit für einen Fehler am kleinsten ist in der Mitte zwischen den beiden Prüfköpfen.

Demgemäß besteht bei der eingangs genannten Reihenanordnung von n nebeneinander angeordneten, einzelnen Prüfköpfen das Problem, dass die Empfindlichkeit bestimmt wird durch die Ultraschallemission im Bereich zwischen zwei benachbarten Prüfköpfen und ebenso durch die Empfindlichkeit der Empfängeranordnung dort. Durch Hin- und Herbewegungen der nebeneinander angeordneten Prüfköpfe kann man auch in den schallschwachen Bereichen eine erhöhte Prüfempfindlichkeit erreichen. Eine derartige Relativbewegung ist aber apparativ aufwendig.

Weiterhin bekannt sind Verfahren zum quasi-lückenlosen Prüfen von Rohren und Stangen mittels rotierenden Prüfkopfsystemen oder sich drehenden Rohren bzw. Stangen. Dabei sind Einzelschwinger umfangssymmetrisch angeordnet, sie werden durch entsprechende Auslegung des Vorschubs der Prüflinge mit überlappenden Prüfspuren betrieben. Nachteilig bei diesen Verfahren ist der hohe erforderliche mechanische Aufwand der Umfangsanordnung. Ferner sind die Sich überlappenden Prüfspuren bzw. Prüfköpfe mechanisch relativ weit voneinander entfernt.

Nach der DE 195 25 446 A1 ist die Zusammenschaltung von mehreren Einzelschwingern bekannt. Durch die Zusammenschaltung von Einzelschwingern entsteht ein neuer Schwinger mit neuen geometrischen Abmessungen und einem Schallfeld, das demjenigen der zusammengesetzten Schwingeranordnung entspricht. Dabei sind den mehreren Einzelschwingern nur ein Sender und ein Empfänger zugeordnet. Nach der DE 195 25 446 ist die Zusammenschaltung permanent gegeben, die gewünschte Schwingergeometrie wird je nach Anforderungen vor Beginn der Prüfungsaufgabe einmal festgelegt, sie wird während der Prüfungsaufgabe nicht mehr geändert.

Hier setzt nun die Erfindung ein. Sie hat es sich zur Aufgabe gemacht, die eingangs genannte Ultraschall-Prüfvorrichtung so weiterzubilden, dass ohne mechanische Relativbewegungen zwischen den Prüfköpfen und dem Prüfling es möglich ist, auch die schallschwachen Bereiche zwischen zwei benachbarten Prüfköpfen mit einer erhöhten Empfindlichkeit zu erfassen.

Ausgehend von der Ultraschall-Prüfvorrichtung der eingangs genannten Art wird diese Aufgabe gelöst durch die Merkmale des Patentanspruchs 1.

Erfindungsgemäß werden also benachbarte Prüfköpfe im Prüftakt elektrisch miteinander verbunden und dann wieder voneinander getrennt, dies erfolgt über die Schalter. Dadurch kann von Prüftakt zu Prüftakt immer eine neue Zusammenstellung mehrerer Prüfköpfe erreicht werden und wird eine Überdeckung der einzelnen Schallfelder dieser Prüfköpfe erzielt. Auf diese Weise wird eine quasi lückenlose Prüfung möglich. Die Zentralachse der jeweils zusammengeschalteten oder aber auch nach wie vor einzeln betriebenen Prüfköpfe wechselt von Prüftakt zu Prüftakt hin und her. Dies ersetzt die bisher mechanisch durchgeführte Hin- und Herbewegung.

Der wesentliche Vorteil einer derartigen Ultraschall-Prüfvorrichtung ist, dass die Prüfempfindlichkeit wesentlich geringere Einbrüche hat als dies beim Stand der Technik der Fall ist. Die erfindungsgemäße Ansteuerung der Reihenanordnung von Prüfköpfen macht eine wesentliche Vereinfachung der Prüfmechaniken möglich. So kann beispielsweise bei einer Prüfvorrichtung für Großrohre auf die Umfangsdrehung der Prüfköpfe verzichtet werden und kann mit relativ einfachen Tauchtechniken, also z.B. einem unterhalb des Prüflings angebrachten Becken, in dem sich die Prüfköpfe befinden, gearbeitet werden.

Die Steuereinheit kann die Schalter während eines beliebigen Zeitpunktes innerhalb jedes einzelnen Prüftaktes betätigen. Die Schalter können auch mehrfach betätigt werden innerhalb eines Prüftaktes. Unter einem Prüftakt wird die komplette Zeitdauer zwischen Taktbeginn und Taktende verstanden. Anstelle von Prüftakt kann man auch Prüfzyklus sagen. Als bevorzugt hat es sich herausgestellt, dass die Schalter jeweils am Anfang eines Prüftaktes und damit vor dem Sendeimpuls betätigt werden. Wann die nächste Betätigung erfoigt, ist dann offen. Die nächste Betätigung kann nach dem Sendeimpuls oder erst bei Beginn des nachfolgenden Prüftaktes geschehen. Die Schalter können auch während der Dauer des Sendeimpulses alle geöffnet sein und erst während der Empfangszeit eine erste Gruppe der Schalter geschlossen und eine zweite geöffnet werden, was dann in einem nachfolgenden Prüftakt wieder geändert wird usw..

Sehr vorteilhaft ist es, wenn es zusätzlich auch Prüftakte nach dem Stand der Technik gibt, bei denen nur ein einzelner Prüfkopf mit einem zugehörigen Sender und einem zugehörigen Empfänger verbunden ist. Die Erfindung ermöglicht es also, auch nach wie vor den Einzeibetrieb durchzuführen. Er wird zwischen Prüftakte mit Parallelbetrieb benachbarter Prüfköpfe zwischengeschaltet.

Vorzugsweise sind immer für zwei benachbarte Prüfköpfe je ein Sender und je ein Empfänger vorhanden. Es ist aber auch möglich, dass pro Prüfkopf jeweils ein Sender und jeweils ein Empfänger vorhanden ist.

Vorteilhafterweise sind die Prüfköpfe untereinander baugleich. Sie sind in einem möglichst engen Abstand voneinander in Reihenrichtung angeordnet. Auf diese Weise wird ein möglichst lückenloses Schallfeld und damit eine weitgehend gleichmäßige Empfindlichkeit über die Länge der Reihe der Prüfköpfe erreicht.

Die Form der Kurve, entlang welcher die n Prüfköpfe nebeneinander angeordnet sind, ist beliebig. Im allgemeinen wird es eine Gerade sein, beispielsweise bei Blechprüfanlagen. Es kann aber auch eine Kreislinie sein oder auch ein Teilstück einer Kreislinie, beispielsweise bei Rohrprüfanlagen. Schließlich kommen auch beliebige Kurvenformen in Anpassung an die Geometrie der jeweiligen Prüflinge in Frage.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- FIG. 1:: eine schematische Darstellung einer Ultraschall-Prüfvorrichtung mit mehreren, in einer Reihe angeordneten, in Seitenansicht dargestellten Prüfköpfen, einer Schalteranordnung und mehreren Sendern und Empfängern, gezeigt ist ein erster Schaltzustand der Schalteranordnung,
- FIG. 2:: die Darstellung gemäß Figur 1, jedoch nunmehr in einer anderen Schaltstellung der Schalteranordnung,
- FIG. 3:: eine Darstellung entsprechend Figur 1, jedoch in einer anderen Ausführung, gezeigt ist wiederum ein erster Zustand der Schalteranordnung und
- FIG. 4:: die Anordnung gemäß Figur 3, jedoch nunmehr mit einem anderen Zustand der Schalteranordnung.

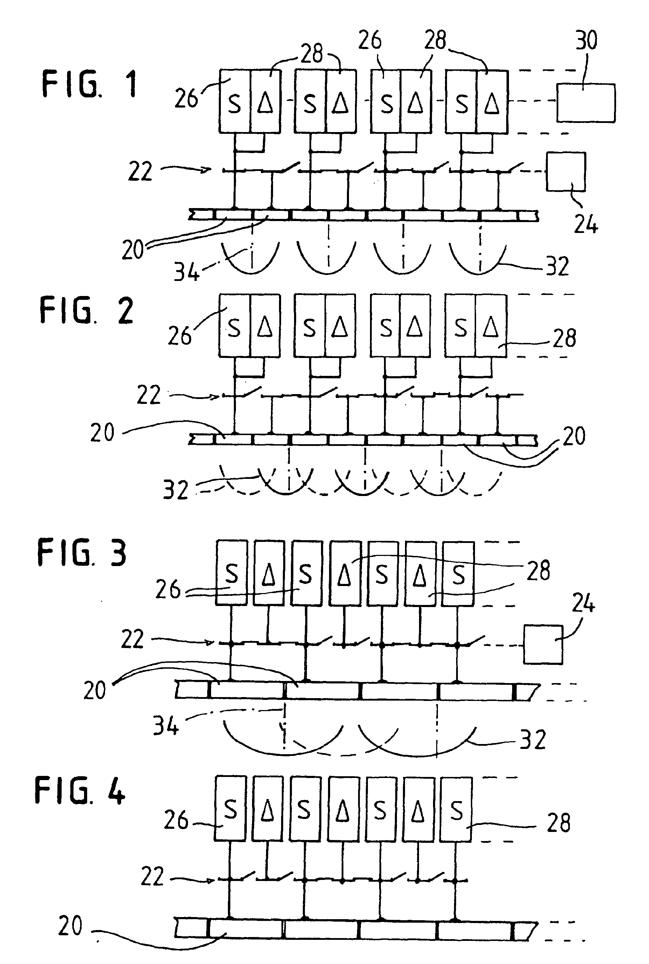

Im Ausführungsbeispiel nach den Figuren 1 und 2 sind insgesamt zehn Prüfköpfe 20 nebeneinander angeordnet, acht von ihnen sind vollständig dargestellt und auch elektrisch vollständig angeschlossen, die beiden restlichen zwei, die sich am Rande befinden, sind nur teilweise dargestellt. Dadurch soll gezeigt werden, dass die Anzahl der Prüfköpfe 20 beliebig ist. Die Erfindung macht schon Sinn bei wenigen Prüfköpfen, ist aber bei mehreren, beispielsweise zehn Prüfköpfen besonders von Vorteil.

Wie alle Figuren zeigen, sind die Prüfköpfe 20 unmittelbar nebeneinander angeordnet. Sie sind auf einer Linie angeordnet, die in den Ausführungsbeispielen eine Gerade ist. Wie üblich haben die einzelnen Prüfköpfe an ihrer unten liegenden Hauptfläche und an ihrer oben liegenden Hauptfläche je eine Elektrode. Die Darstellung nach den Figuren ist so zu verstehen, dass die unteren Elektroden gemeinsam zusammengeschaltet sind, beispielsweise über ein Substrat miteinander verbunden sind. Nur die oberen Elektroden sind einzeln herausgeführt, hierzu dienen jeweils Anschlüsse an den oberen Elektroden, wie sie in allen Figuren erkennbar sind.

Oberhalb der Zeilenanordnung der Prüfköpfe 20 befindet sich eine Schalteranordnung 22, die im Ausführungsbeispiel nach den Figuren 1 und 2 ebenso viele Schalter wie Prüfköpfe 20, in der Ausführung nach den Figuren 3 und 4 sogar doppelt so viele Schalter wie Prüfköpfe 20 hat. Jeder Schalter kann einzeln angesteuert werden, hierfür ist eine Steuereinheit 24 vorgesehen.

Oberhalb der Schalteranordnung 22 befinden sich mehrere einzelne Sender 26 und Empfänger 28, dabei sind jeweils ein Sender 26 und ein Empfänger 28 zu einem Paar elektrisch parallel geschaltet. Die Sender 26 und Empfänger 28 werden gemeinsam durch eine Steuervorrichtung 30 für die Prüfung angesteuert. Sie gibt Prüftakte vor. Im Rahmen eines Prüftaktes wird erstens ein Steuerbefehl an mindestens einen Sender 26 ausgegeben, danach steht zweitens eine Empfangszeit für die Empfänger zur Verfügung. Aufgrund des Steuerbefehls gibt der Sender ein Sendesignal aus, das über den zugeordneten bzw. zugeschalteten mindestens einen Prüfkopf 20 in ein Ultraschallsignal umgewandelt und nach Reflexion wieder von demselben Prüfkopf 20 oder auch einem anderen oder auch einer Kombination von Prüfköpfen 20 empfangen, zurückgewandelt und im zugehörigen Empfänger 28 verstärkt wird. Die zugehörigen Anzeigevorrichtungen sind hier nicht dargestellt, sie sind Stand der Technik. Die Steuervorrichtung 30 kann so ausgelegt werden, dass sie alle Sender 26 und Empfänger 28 gemeinsam im selben Prüftakt ansteuert, sie kann aber auch so ausgelegt sein, dass nur einzelne Gruppen parallel betrieben werden oder aber auch alle Sender 26 bzw. Empfänger 28 unabhängig voneinander oder z.B. zukzessive betrieben werden.

Die einzelnen Schalter werden im folgenden gemäß ihrer Reihenfolge von links nach rechts durchnumeriert. Nach Figur 1 ist der erste Schalter geschlossen, der zweite ist geöffnet usw., es sind also alle ungradzahligen Schalter geschlossen, die geradzahligen sind geöffnet. Es wird einmal angenommen, dass der gezeichnete Schaltzustand vorliegt bei Beginn eines Prüftaktes, jedenfalls vor Aussenden eines Sendeimpulses. Damit gelangt der Sendeimpuls des ersten Senders links in Figur 1 auf die beiden ersten, vollständig dargestellten Prüfköpfe 20, die über den ersten Schalter parallel geschaltet sind. Der Schaltzustand bleibt während des gesamten Prüftaktes erhalten. Damit liegt er auch während der Empfangszelt vor. Der Empfang erfolgt also auch durch zwei parallel geschaltete Prüfköpfe, nämlich die ersten beiden vollständig dargestellten Prüfköpfe. Gleiches gilt für die drei weiteren Sender- Empfängeranordnungen und die mit diesen zusammenarbeitenden Prüfköpfe.

Unterhalb der Prüfköpfe 20 ist in Figur 1 mit 32 der Verlauf der Empfindlichkeit für den Nachweis von Fehlern dargestellt. Entsprechend der Zusammenschaltung von Prüfköpfen ist die Empfindlichkeit entlang eines Zentralstrahls 34, der von der Mitte der zusammengeschalteten Prüfköpfe ausgeht, am größten und nimmt dann zur Seite hin ab, dies ist durch den Verlauf nach oben dargestellt. Aus Figur 1 ist deutlich ersichtlich, dass zwischen zwei benachbarten Prüfkopfpaaren die Nachweisempfindlichkeit der Prüfanlage gering ist.

Dies wird nun erfindungsgemäß dadurch behoben, dass in einem nachfolgenden Prüftakt, beispielsweise im unmittelbar nachfolgenden Prüftakt, die Schalterstellung komplett invertiert wird. Wie aus Figur 2 ersichtlich ist, sind nun die geradzahligen Schalter geschlossen und die ungradzahligen Schalter sind geöffnet. Dadurch verschieben sich die Zentralstrahlen 34 um die Breite eines Prüfkopfes 20, die Empfindlichkeitskurven 32 sind wiederum mit ausgezogenen Strichen dargestellt. Zugleich sind nocheinmal gestrichelt die Empfindlichkeitskurven aus Figur 1 wiederholt. Man erkennt die Überlagerung und die Tatsache, dass nun die minimale Empfindlichkeit deutlich angehoben ist. Dabei ist noch zu bemerken, dass die Stellen geringster Nachweisempfindlichkeit nunmehr auf den Zentralstrahlen einzelner, nicht zusammengeschaltet mit einem anderen Prüfkopf 20 betriebener Prüfköpfe liegen und dass zusätzlich durch Einzelbetrieb von Prüfköpfen, wie er erfindungsgemäß auch vorgesehen ist, noch die Minimalstelien aufgebessert werden können. In einem dritten Prüftakt können daher beispielsweise alle Schalter geöffnet sein, was dazu führt, dass nur der erste vollständig dargestellte, der zweite vollständig dargestellte, der dritte vollständig dargestellte Prüfkopf usw. betrieben werden.

In der Ausführung nach den Figuren 3 und 4 sind für jeden Prüfkopf 20 jeweils ein Sender 26 und ein Empfänger 28 vorgesehen. Jeder Sender ist permanent mit einem unmittelbar unter ihm befindlichen Prüfkopf 20 verbunden. Die Empfänger sind über die Schalteranordnung 22 zuschalt- und abschaltbar. Die Umschaltung der Schalter erfolgt während des Prüftaktes erst nach dem Sendeimpuls, also nur für die Empfangszeit. Während des Sendeimpulses sind alle Schalter geöffnet. Dies hat den großen Vorteil, dass der Sendeimpuls nicht unmittelbar in den Empfänger hineingelangt. Es ist aber nicht ausgeschlossen, dass man ebenso wie im Ausführungsbeispiel nach den Figuren 1 und 2 arbeitet und schon vor Aussenden des Sendeimpulses den einen oder den anderen Schalter schließt, was zur Folge hat, dass der Sendeimpuls unmittelbar in den Empfänger gelangt. Entscheidend ist nur, dass während der Empfangszeit jeder Empfänger in der hier dargestellten Ausführung nach den Figuren 3 und 4 jeweils mit zwei benachbarten Prüfköpfen 20 verbunden ist, wobei allerdings jeder zweite Empfänger völlig ohne Verbindung ist und für den Prüftakt nicht benötigt wird. Er wird dann in einem nachfolgenden Prüftakt eingesetzt. Wiederum ist in Figur 3 mit ausgezogenen Strichen der Empfindlichkeitsverlauf 32 für den gewählten Schaltzustand der Schalteranordnung 22 dargestellt. Zugleich ist gestrichelt der Empfindlichkeltsverlauf 32 angedeutet, wie er in der Anordnung gemäß Figur 4 erzielt wird. Man erkennt wiederum, dass die Stellen geringster Empfindlichkeit nun mit den Stellen höchster Empfindlichkeit bei der anderen Schalterstellung zusammenfallen, so dass insgesamt eine Überlappung und ein Ausgleich der Gesamtempfindlichkeitskurve erreicht wird.

Der Fachmann versteht, dass er die Schalteranordnung in den Auführungen nach beiden Ausführungsbeispielen auch in andere Zustände bringen kann, als dargestellt. So kann in der Anordnung nach den Figuren 3 und 4 beispielsweise jeder ungradzahlige Schalter geschlossen und jeder geradzahlige Schalter geöffnet werden. Dies hat zur Folge, dass jeder Prüfkopf 20 einzeln betrieben wird und jedem Prüfkopf 20 ein eigener Sender 26 und ein zugehöriger eigener Empfänger 28 zugeordnet ist. In den Ausführungsbeispielen sind die Prüfköpfe 20 bauglieich dargestellt. Sie haben einen möglichst geringen Abstand in Längsrichtung der Reihe, in der sie angeordnet sind.

## Patentansprüche

1. Ultraschall-Prüfvorrichtung für die zerstörungsfreie Werkstoffprüfung und mit einer Anzahl n nebeneinander angeordneter, einzelner Prüfköpfe (20) sowie mit mindestens einem Sender (26) und mindestens einem Empfänger (28) für den Betrieb mindestens eines Prüfkopfes (20), wobei die Prüfvorrichtung in Prüftakten arbeitet und innerhalb eines Prüftaktes zunächst der Sender (26) einen Sendeimpuls abgibt und im Anschluss daran der Empfänger (28) eine Empfangszeit hat, benachbarte Prüfköpfe (20) jeweils durch einen Schalter elektrisch miteinander verbunden sind, eine Steuereinheit (24) für diese Schalter vorgesehen ist, die die Schalter getaktet vom Prüftakt betätigt, **dadurch gekennzeichnet, dass** die Ultraschall-Prüfvorrichtung im Impuls-Echo Betrieb arbeitet, dass mehr als ein Sender (26) und mehr als ein Empfänger (28) vorgesehen sind, dass die Anzahl n mindestens drei ist, dass die Steuereinheit (24) die Schalter so betätigt, dass während eines Prüftaktes ein Prüfkopf (20) zumindest für einen Teil der Zeitdauer dieses Prüftaktes mit dem ihm links benachbarten Prüfkopf (20), aber nicht mit dem ihm rechts benachbarten Prüfkopf (20) verbunden ist, und dass während eines anderen Prüftaktes derselbe Prüfkopf (20) nicht mit dem ihm links benachbarten Prüfkopf (20) verbunden ist.

2. Ultraschall-Prüfvorrichtung nach Anspruch 1, **dadurch gekennzeichnet, dass** die Steuereinheit (24) die Schalter jeweils am Anfang eines Prüftaktes und damit vor dem Sendeimpuls betätigt.

3. Ultraschall-Prüfvorrichtung nach Anspruch 1 oder 2, **dadurch gekennzeichnet, dass** die Steuereinheit (24) die Schalter jeweils nach dem Sendeimpuls und vor der Empfangszeit betätigt.

4. Ultraschall-Prüfvorrichtung nach Anspruch 1, **dadurch gekennzeichnet, dass** es zusätzlich Prüftakte gibt, in denen der eine Prüfkopf (20) während des gesamten Prüftaktes nicht mit dem ihm links benachbarten Prüfkopf (20) und auch nicht mit dem ihm rechts benachbarten Prüfkopf (20) verbunden ist.

5. Ultraschall-Prüfvorrichtung nach Anspruch 1, **dadurch gekennzeichnet, dass** für die n-Prüfköpfe (20) im wesentlichen n halbe Sender (26) und im wesentlichen n/2 Empfänger (28) vorgesehen sind, insbesondere dass für jeweils zwei benachbarte Prüfköpfe (20) ein Sender (26) und ein Empfänger (28) vorgesehen sind.

6. Ultraschall-Prüfvorrichtung nach Anspruch 1, **dadurch gekennzeichnet, dass** für jeden der n-Prüfköpfe (20) ein Sender (26) vorgesehen ist und das vorzugsweise auch n Empfänger (28) vorgesehen sind.

7. Ultraschall-Prüfvorrichtung nach Anspruch 1, **dadurch gekennzeichnet, dass** der mindestens eine Sender (26) permanent an einen Prüfkopf (20) elektrisch angeschlossen ist.

8. Ultraschall-Prüfvorrichtung nach Anspruch 1, **dadurch gekennzeichnet, dass** die Prüfköpfe (20) untereinander baugleich sind.

9. Ultraschall-Prüfvorrichtung nach Anspruch 1, **dadurch gekennzeichnet, dass** die Prüfköpfe (20) in einem möglichst geringen Abstand voneinander angeordnet sind.

## Claims

1. An ultrasonic testing apparatus for non destructive material testing and with a number n of discrete probes (20) disposed in a side-by-side relationship as well as with at least one emitter (26) and at least one receiver (28) for operation of at least one probe (20), wherein said testing apparatus works in test cycles, within one test cycle the emitter (26) delivering at first an emitted pulse and the receiver (28) having thereafter a reception time, neighboring probes (20) being each electrically connected to each other through a switch, a control unit (24) for these switches being provided to actuate the switches in the rhythm of the test cycle, **characterized in that** the ultrasonic testing apparatus operates in the pulse-echo mode of operation, that there is provided more than one emitter (26) and more than one receiver (28), that the number n is at least three, that the control unit (24) actuates the switches in such a manner that during a test cycle a probe (20) is connected at least for part of the duration of said test cycles to its left neighboring probe (20) but not to its right neighboring probe (20) and that the same probe (20) is not connected to its left neighboring probe (20) during another test cycle.

2. The ultrasonic testing apparatus as set forth in claim 1, **characterized in that** the control unit (24) actuates the switches at the beginning of a respective test cycle and thus before the emitted pulse.

3. The ultrasonic testing apparatus as set forth in claim 1 or 2, **characterized in that** the control unit (24) actuates the switches after the emitted pulse and before reception time.

4. The ultrasonic testing apparatus as set forth in claim 1, **characterized in that** there are additional test cycles in which the one probe (20) is connected neither to its left neighboring probe (20) nor to its right-neighboring probe (20) during the entire test cycle.

5. The ultrasonic testing apparatus as set forth in claim 1, **characterized in that** n half emitters (26) and substantially n/2 receivers (28) are substantially provided for the n probes (20), more specifically that for two respective neighboring probes (20) there are provided one emitter (26) and one receiver (28).

6. The ultrasonic testing apparatus as set forth in claim 1, **characterized in that** one emitter (26) is provided for each of the n probes (20) and that there are also preferably provided n receivers (28).

7. The ultrasonic testing apparatus as set forth in claim 1, **characterized in that** the at least one emitter (26) is permanently electrically connected to a probe (20).

8. The ultrasonic testing apparatus as set forth in claim 1, **characterized in that** the probes (20) are built identically.

9. The ultrasonic testing apparatus as set forth in claim 1, **characterized in that** the probes (20) are spaced the smallest possible distance apart.

## Revendications

1. Dispositif de contrôle ultrasonore pour le contrôle non destructif de matériaux et avec un nombre n de palpeurs (20) distincts disposés l'un à côté de l'autre ainsi qu'avec au moins un émetteur (26) et au moins un récepteur (28) pour la mise en oeuvre d'au moins un palpeur (20), le dispositif de contrôle fonctionnant en cycles, l'émetteur (26) émettant tout d'abord une impulsion et le récepteur (28) ayant ensuite un temps de réception au sein d'un cycle de contrôle, des palpeurs voisins (20) étant reliés l'un à l'autre électriquement par un commutateur respectif, une unité de commande (24) étant prévue pour ces commutateurs qu'elle actionne à la cadence du cycle de contrôle, **caractérisé en ce que** le dispositif de contrôle ultrasonore fonctionne en mode d'échos impulsionnels, que sont prévus plus d'un émetteur (26) et plus d'un récepteur (28), que le nombre n est au moins égal à trois, que l'unité de contrôle (24) actionne les commutateurs de telle sorte que pendant un cycle de contrôle un palpeur (20) est relié pendant au moins une partie du temps que dure ce cycle avec le palpeur (20) voisin situé à sa gauche mais n'est pas relié au palpeur (20) voisin situé à sa droite et que pendant un autre cycle de contrôle ce même palpeur (20) n'est pas relié avec le palpeur voisin (20) situé à sa gauche.

2. Dispositif de contrôle ultrasonore selon la revendication 1, **caractérisé en ce que** l'unité de contrôle (24) actionne les commutateurs au début de chaque nouveau cycle et par conséquent avant l'impulsion émise.

3. Dispositif de contrôle ultrasonore selon la revendication 1 ou 2, **caractérisé en ce que** l'unité de contrôle (24) actionne les commutateurs après chaque impulsion émise et avant chaque temps de réception.

4. Dispositif de contrôle ultrasonore selon la revendication 1, **caractérisé en ce qu'**il existe des cycles supplémentaires dans lesquels, pendant tout le cycle de contrôle, l'un des palpeurs (20) n'est pas relié avec le palpeur voisin (20) situé à sa gauche et n'est pas non plus relié au palpeur voisin (20) situé à sa droite.

5. Dispositif de contrôle ultrasonore selon la revendication 1, **caractérisé en ce que** sensiblement n demi émetteurs (26) et sensiblement n/2 récepteurs (28) sont prévus pour les n palpeurs (20), notamment **en ce que** un émetteur (26) et un récepteur (28) sont prévus pour deux palpeurs (20) voisins respectifs.

6. Dispositif de contrôle ultrasonore selon la revendication 1, **caractérisé en ce qu'**un émetteur (26) et aussi de préférence n récepteurs (28) sont prévus pour chacun des n palpeurs (20).

7. Dispositif de contrôle ultrasonore selon la revendication 1, **caractérisé en ce que** l'au moins un émetteur (26) est en permanence électriquement branché à un palpeur (20).

8. Dispositif de contrôle ultrasonore selon la revendication 1, **caractérisé en ce que** les palpeurs (20) sont d'une exécution identique.

9. Dispositif de contrôle ultrasonore selon la revendication 1, **caractérisé en ce que** les palpeurs (20) sont disposés avec un écartement entre eux le plus réduit possible.
